# EUROPÄISCHE PATENTSCHRIFT

(11) **EP 0 964 041 B1**
(45) Veröffentlichungstag und Bekanntmachung des Hinweises auf die Patenterteilung: **06.08.2003**
(21) Anmeldenummer: 99110124.7
(22) Anmeldetag: 25.05.1999
(51) Int. Cl.: C09J 121/00, C09J 7/02

(54) **Verwendung von Monothiolen als Stabilisatoren in geschmolzenen Haftklebemassen auf der Basis von Naturkautschuk oder Synthesekautschuken**
Use of monothioles in hot melt adhesives based on natural or synthetic rubber
Utilisation de monothiols dans des adhésifs thermofusibles à base de caoutchouc naturel ou synthétique

(30) Priorität: 12.06.1998 DE 19826103
(43) Veröffentlichungstag der Anmeldung: 15.12.1999
(73) Patentinhaber: Tesa AG, 20253 Hamburg (DE)
(72) Erfinder: Karmann, Werner Dr., 22147 Hamburg (DE); Grobe, Claus, 20144 Hamburg (DE)

(56) Entgegenhaltungen:
- WO-A-97/07963
- FR-A- 2 285 428

## Beschreibung

Die Erfindung betrifft die Verwendung von Monothiolen.

Haftklebemassen auf der Basis von Naturkautschuk/Harzmischungen werden üblicherweise in Lösungsmitteln hergestellt. Zur Produktion von Klebebändern werden diese Lösungen als dünne Schicht auf Träger aufgetragen, getrocknet und zu Bändern geschnitten. Das erfordert aufwendige Bearbeitungsprozesse, teure explosionsgeschützte Beschichtungs- und Trocknungsanlagen und kostenintensive Verbrennungs- oder Rückgewinnungsanlagen.

Ein sehr viel preisgünstigerer Weg ist die Herstellung von Schmelzmassen. Üblicherweise werden hierfür SBS- und SIS-Blockcopolymere eingesetzt. Da die Eigenschaften dieser Klebstoffe gegenüber den auf Naturkautschuk basierenden begrenzt sind und die Rohstoffkosten höher liegen, haben sie sich nur auf bestimmten Sektoren durchgesetzt.

Besondere Vorteile weisen daher Schmelzhaftklebmassen auf der Basis von Naturkautschuken oder synthetischen Dienkautschuken wie IR und SBR auf. Da diese für die lösungsmittelfreie Verarbeitung auf ein relativ niedriges Molekulargewicht abgebaut werden müssen, ist nach der Beschichtung ein effektives Vemetzungsverfahren erforderlich. Die Wirksamkeit der Strahlenvernetzung dieser Massen kann durch geringe Zusätze an mehrfunktionellen (Meth)acrylaten als Vemetzungspromotoren wesentlich gesteigert werden.

Während des Herstellungs- und Auftragsverfahrens werden geschmolzene Klebemassen längere Zeit recht hohen Temperaturen ausgesetzt. Dabei zeigt sich, daß sie zum Vergelen neigen und danach nicht mehr zu dünnen Schichten mit glatten Oberflächen ausgeformt werden können.

Bekanntlich ist die Stabilisierung heißer Schmelzen von Polydienkautschuken für Schmelzhaftkleber schwierig:
In Gegenwart von Luftsauerstoff neigen diese Massen zum Abbau. Hiergegen sind die bekannten Antioxidantien wirksam, allerdings ist ihre Wirkung begrenzt.
Bei längeren Verweilzeiten muß der Sauerstoff ausgeschlossen werden, um die Eigenschaften stabil zu erhalten. Der Ausschluß kann durch Verdrängung der Luft durch Stickstoff, Kohlendioxid o.a. erfolgen oder auch durch Vermeidung von Lufträumen.

Unter sauerstofffreien Bedingungen neigen die Kautschukmassen zur Vergelung. Das gilt insbesondere dann, wenn zur Erhöhung der Strahlenvemetzung Vernetzungspromotoren zugesetzt worden sind. Hiergegen sind die üblichen in der Gummi- und Klebstoffindustrie eingesetzten Antioxidantien unwirksam. In höheren Konzentrationen zugesetzt, erhöhen sie den Dosisbedarf für die Strahlenvemetzung.

In der WO 97/07963 (Munson u.a.) wird daher ein Zusatz von "Non-Thermosettable Phenolic Tackifying Resins" beschrieben, der überraschenderweise neben der klebrigmachenden Wirkung auch zu einer Stabilisierung der Klebmasse bei hohen Temperaturen führt. Das gilt sowohl für die reine Klebmasse als auch für solche, die zur Erhöhung der Strahlenvernetzbarkeit mit Bismaleimiden versetzt worden war. Der Einfluß auf die Klebeigenschaften begrenzt allerdings die freie Einstellbarkeit in der Auswahl und Kombination der Klebharze.

Aufgabe der Erfindung war es, Zusätze zu finden, die einerseits diese Vergelung verhindern andererseits aber nicht die Eigenschaften der Klebmassen, insbesondere ihre Strahlenvernetzbarkeit, beeinträchtigen. Weiterhin war zu fordern, daß die Substanzen bei den erforderlichen Temperaturen keine gesundheitsschädigenden oder störenden Dämpfe emittieren.

Gelöst wird die Aufgabe gemäß Hauptanspruch durch die Verwendung von festen, in Kautschuk löslichen oder dispergierbaren Monothiolen als Stabilisatoren in geschmolzenen Haftklebemassen auf der Basis von Naturkautschuk oder Synthesekautschuken, geeigneten Klebharzen und Promotoren zur Erhöhung der Strahlenvernetzungsausbeute.
Gegenstand der Unteransprüche sind besonders vorteilhafte Weiterbildungen des Erfindungsgedankens.

In einer bevorzugten Ausführungsform ist das Monothiol 2-Merkapto-Benzimidazol oder substituierte Derivate, insbesondere 4-(und/oder 5)-Methyl-2-Merkapto-Benzimidazol.
Um die Wirkung der Merkaptane weiter zu steigern, kann zusätzlich mindestens ein flüssiger mit dem Kautschuk verträglicher Phosphit-Ester vorhanden sein.
Schließlich umfaßt der Erfindungsgedanke allgemein eine geschmolzene Haftklebemasse auf der Basis von Naturkautschuk oder Synthesekautschuken, geeigneten Klebharzen und Promotoren zur Erhöhung der Strahlenvemetzungsausbeute, enthaltend feste, in Kautschuk lösliche oder dispergierbare Monothiole als Stabilisatoren und gegebenenfalls zumindest einen flüssigen, mit dem Kautschuk verträglichen Phosphit-Ester.

Das erfindungsgemäß eingesetzte Monothiol findet üblicherweise in der Gummiindustrie als Stabilisator und als Retarder bei der Vulkanisation mit schwefelhaltigen Systemen Verwendung.
So ist zum Beispiel das 4-(und/oder 5)-Methyl-2-Merkapto-Benzimidazol unter dem Namen Vulkanox ® MB 2 als Alterungsschutzmittel bei der Firma Bayer AG, Leverkusen, erhältlich. Vorgeschlagen werden als Anwendungsgebiete für Vulkanox ® MB 2 u.a. Mischungen auf Basis von Naturkautschuk und synthetischen Kautschuk vom Typ SBR und NBR, in denen Vulkanox ® MB 2 eine Schutzwirkung gegen Oxidation und gegen die schädlichen Folgen einer Übervulkanisation zeigt. Diese Wirkung als Retarder ist an die Schwefelvulkanisation gebunden.

Normalerweise führen Schwefelverbindungen häufig - insbesondere nach Einwirkung ionisierender Strahlung - zur Bildung von sehr unangenehmen Geruchskomponenten, was bei den erfindungsgemäßen Merkaptobenzimidazolen überraschenderweise nicht auftritt.

Weiterhin ist bekannt, daß Monothiole in vielen Polymeren (Polyethylen, Polyacrylaten etc.) die Vernetzungsausbeute stark verringern. Überraschenderweise tritt auch dieser Effekt bei den erfindungsgemäßen geschmolzenen Kautschukmassen nicht auf.

Nicht bekannt war bisher das Verhalten dieser Monothiole als Stabilisatoren in mit Vernetzungspromotoren versetzten geschmolzenen Haftklebemassert auf der Basis von Naturkautschuk oder Synthesekautschuken und geeigneten Klebharzen.

Überraschend und für den Fachmann nicht vorauszusehen, stellen die erfindungsgemäß eingesetzten Monothiole schon bei kleinen Zusätzen wirksame Stabilisatoren für die genannten Klebemassen dar, wenn diese Promotoren zur Erhöhung der Strahlenvemetzungsausbeute enthalten.
Als Vernetzungspromotoren sind in erster Linie mehrfunktionelle (Meth)acrylate wie Hexandiol-diacrylat (HDDA), Trimethylolpropan-triacrylat (TMPTA), Pentaerythritol-tetraacrylat (PETA) sowie deren eth- oder propoxylierte oder dimerisierte Derivate geeignet.

Die beschriebene Wirkung kann durch Zugaben von Phosphitestern noch gesteigert werden.

Mit Hilfe der folgenden Beispiele soll die nicht zu erwartende Eignung dieser Monothiole als Stabilisatoren nachgewiesen werden, ohne damit die Erfindung beschränken zu wollen.

Um die Wirkung als Stabilisatoren charakterisieren zu können, wurden die Stabilität der Massen nach ihrer Vergelung durch Temperatureinwirkung beurteilt. Die Strahlenvernetzbarkeit der Klebemassen wurden durch Messung des Gelanteils bestimmt. Hierzu wurden die nachfolgend geschilderten Verfahren angewandt.

### 1. Untersuchung der Stabilität durch Beurteilung der Vergelung

Da die Untersuchung der Stabilität der Klebmassen in realen Beschichtungsanlagen sehr aufwendig ist, wurde die Wirkung der Substanzen auf die Stabilität der Klebemassen in einem Modellversuch getestet. Dazu wurden die Klebmassen zu Kugeln von ca. 10 mm geformt und in einen Zylinder eingeführt, aus dem dann der Luftsauerstoff durch mehrfaches Spülen mit Stickstoff weitgehend beseitigt wurde. Anschließend wurden sie ca. 30 min bei 140 C unter einem Druck von 3-4 bar Stickstoff erhitzt.
Nach dem Erhitzen wurden kleine Mengen der Proben 20 h mit der 20-fachen Menge Toluol geschüttelt und die Gelbildung nach dem in Tabelle 1 genannten Schlüssel beurteilt:

**Tabelle 1**

| Schlüssel zur Beurteilung der Gelbildung nach der Erhitzung | |
|---|---|
| 0 | klar löslich, kein Makrogel |
| 1 | geringe Schlieren, sehr wenig Gel |
| 2 | geringe Gelflocken, etwas Gel |
| 3 | deutlich erkennbare Gelflocken |
| 4 | aufgequollener Gelklumpen |

### 2. Messung des Gelanteils zur Bestimmung des Vernetzungsgrads

Die zu bestimmenden Klebebandproben wurden in quadratischen Stücken von 20 cm² ausgestanzt und in einen Beutel von Polyethylen-Spinnvlies eingeschweißt (Tyvek der Firma DuPont mit einem Flächengewicht von ca. 55 g/m²). Die Muster wurden 3 Tage unter Schütteln mit Toluol extrahiert. Dabei wurde das Toluol täglich gewechselt. Anschließend wurde es gegen Hexan/Heptan ausgetauscht und bei etwa 110 C getrocknet.
Der Gelanteil wurde durch Differenzwägungen bestimmt, wobei Extraktionsverluste des Vlieses und des Trägers berücksichtigt wurden.

### Beispiel 1

In einem Sigma-Kneter wurden folgende Bestandteile in einem Gemisch aus 80 TI Benzin (Siedebereich 65 bis 90 °C) und 20 TI Toluol bis zur Homogenität geknetet:

| | |
|---|---|
| Naturkautschuk SMR CV 50 | 48,75 % |
| Harz 115 <#> | 48,75 % |
| phenolisches Antioxidant <+> | 0,5 % |
| Ebecryl 160 <++> | 2,0 % |

(<#> Polyterpenharz mit Erweichungspunkt 115 C ) ( <+> Ralox 46-P der Firma Raschig AG, Ludwigshafen ) ( <++> ethoxyliertes Trimethylolpropantriacrylat der Firma UCB-Chemie GmbH, Kerpen )

In diese Mischung wurden die in Tabelle 2 genannten Stabilisatoren in den angegebenen Konzentrationen (bezogen auf die Trockenmasse) eingemischt. Diese Massen wurden auf Trennpapier ausgestrichen und ca. 16 h bei Raumtemperatur getrocknet. Anschließen wurden daraus, wie oben beschrieben, Kugeln von geformt und die Stabilität festgestellt. Die Ergebnisse sind in der Tabelle 2 zusammengefaßt.

**Tabelle 2**

| Stabilität der Massen nach Erhitzung unter Stickstoff | | |
|---|---|---|
| Substanz | Konz. (%) | Gelbildung nach Tabelle 1 |
| ohne Zusatz | - | 4 |
| Ralox 46-P 〈1〉 | 2 | 4 |
| Irganox 1010 〈2〉 | 2 | 4 |
| Irganox 1035 〈3〉 | 2 | 4 |
| Weston 399 〈4〉 | 0,5 | 3 |
| Irganox 565 〈5〉 | 2 | 3 |
| Irganox PS 802 〈6〉 | 2 | 3 |
| Lowinox AH 25 〈7〉 | 2 | 3 |
| Weston 399 | 1 | 2 |
| MBI 〈8〉 | 0,2 | 1 |
| Weston 399 | 2 | 1 |
| Weston 399 + MBI | 0,5 + 0,2 | 0 |

**Tabelle 3**

| Eingesetzte Substanzen: | | |
|---|---|---|
| | Chemischer Aufbau | Hersteller / Lieferant |
| 〈1〉 | 2,2'-Methylen-bis(4-methyl-6-tert.butyl-phenol) | Raschig AG, |
| | | Ludwigshafen |
| 〈2〉 | Pentaerythrityl-tetrakis(3,5-di-tert.butyl-4-hydroxy-hydrocinnamate) | Ciba-Geigy, |
| | | Basel |
| 〈3〉 | 2,2'-Thiodiethyl-bis(3,5-di-tert.butyl-4-hydroxy-hydrocinnamate) | Ciba-Geigy, |
| | | Basel |
| 〈4〉 | Tris-(nonylphenyl)-phosphit | Interorgana GmbH, |
| | | Köln |
| 〈5〉 | 4-[(4,6-bis-[oktylthio]-s-triazin-2-yl)amino]-2,6-di-tert.butylphenol | Ciba-Geigy, |
| | | Basel |
| 〈6〉 | β,β'-Thio-di-propionsäure-di-stearylester | Ciba-Geigy, |
| | | Basel |
| 〈7〉 | 2,5-Di-tert.amyl-hydrochinon | Chemische Werke Lowi, |
| | | Waldkreiburg |
| 〈8〉 | Vulkanox MB2/MG 2-Merkapto-4(5)-methyl-benzimidazol (MBI) | Bayer AG, |
| | | Leverkusen |

Man erkennt, daß MBI bereits in sehr geringen Konzentrationen wirksam ist und die Wirksamkeit durch Zugabe von geringen Mengen an organischen Phosphiten noch wesentlich gesteigert werden kann.

### Beispiel 2

Zur Überprüfung, ob diese Ergebnisse auch auf die Schmelze übertragen werden können, wurde die gleiche Grundmasse lösungsmittelfrei hergestellt.

Zur Beschleunigung der Herstellung wurde ein 2-stufiges Verfahren angewandt:
In einer ersten Stufe wurde der Kautschuk zusammen mit den Stabilisatoren und einer kleinen Menge Klebharz in einem Labor-Innenmischer der Firma Werner & Pfleiderer, Stuttgart, 4 min bei 60 U/min geknetet. Hergestellt wurden 2 "mill bases" mit folgender Zusammensetzung:

**Tabelle 4**

| Zusammensetzung der Grundmasse | | |
|---|---|---|
| | mill base Y | mill base Z |
| Naturkautschuk CV 50 | 90,1 % | 89,7% |
| Harz 115 | 9% | 9% |
| Colan 46 | 0,9 % | 0,9 % |
| MBI | | 0,4 % |

In der zweiten Stufe wurde diese "mill bases" in einem Schmelzkneter der Firma Werner & Pfleiderer, Stuttgart, zunächst 20 min bei 100 °C vorgewärmt. Dann wurde der Knetvorgang gestartet und das restliche Klebharz innerhalb von etwa 25 min portionsweise zugefügt und 20 min homogen geknetet. Anschließend wurde das Ebecryl 160 (20% in Ethylacetat) portionsweise innerhalb von 8 min zugefügt und anschließend 15 min homogen geknetet.

Bei der Masse D wurde vor der Harzzugabe innerhalb von 2 min das Weston 399 (15% in Ethylacetat) zugefügt und dieses anschließend 5 min homogen geknetet.

Während des ganzen Vorgangs war der Luftsauerstoff durch Einleiten von Stickstoff ausgeschlossen. Die so hergestellten Massen hatten folgende Zusammensetzung:

**Tabelle 5**

| Zusammensetzung der Massen | | | | | | | | |
|---|---|---|---|---|---|---|---|---|
| | Masse A | | Masse B | | Masse C | | Masse D | |
| | Zugabe (g) | Gehalt (%) | Zugabe (g) | Gehalt (%) | Zugabe (g) | Gehalt (%) | Zugabe (g) | Gehalt (%) |
| mill base Y | 324,75 | | 324,75 | | | | | |
| mill base Z | | | | | 325,3 | | 323,6 | |
| NR CV50 | | 49,7 | | 48,8 | | 48,7 | | 48,4 |
| Harz 115 | 263,25 | 49,7 | 263,25 | 48,8 | 262,7 | 48,6 | 261,4 | 48,4 |
| Ebecryl 160 | | | 12 | 2,0 | 12 | 2,0 | 12 | 2,0 |
| Colan 46 | | 0,5 | | 0,5 | | 0,5 | | 0,5 |
| MBI | | | | | | 0,2 | | 0,2 |
| Weston 399 | | | | | | | 3 | 0,5 |

Diese Massen wurden in einem geschlossenen Gefäß bei 160 °C unterschiedliche Zeiten gelagert und die Gelbildung nach Tabelle 1 beurteilt. Das Ergebnis ist in Tabelle 6 zusammengestellt:

**Tabelle 6**

| Stabilität der Klebmassen | | | | |
|---|---|---|---|---|
| Zeit nach dem Zufügen des Ebecryl 160 | Masse A | Masse B | Masse C | Masse D |
| 0 min | 0 | 0 | 0 | 0 |
| 30 min | | 4 | 0 | 0 |
| 60 min | 0 | 4 | 0 | 0 |
| 120 min | 0 | 4 | 0 | 0 |
| 180 min | 0 | 4 | 0 | 0 |
| 240 min | | | 0 | |

Man erkennt, daß die Stabilität der Massen bei der Herstellung im Schmelzkneter und beim Verweilen im Leitungssystem durch Zugabe der Stabilisatoren entscheidend verbessert worden ist.

### Beispiel 3

In diesem Beispiel wurde der Einfluß der Stabilisatoren auf die Strahlenvernetzung untersucht. Hierzu wurden Klebmassen aus Beispiel 1 in einer Stärke von 35 g/m² auf PET-Folie ausgestrichen, 24 h bei Raumtemperatur getrocknet und an einem Elektronenbeschleuniger der Firma Polymer-Physik unter Stickstoff mit unterschiedlichen Strahlendosen vernetzt. Die Beschleunigungsspannung betrug 200 kV. Die Strahlendosis D wurde aus dem Strahlstrom 1 und der Bahngeschwindigkeit v nach D=K*I/v mit K=59,5 (kGy*m)/(mA*min) errechnet (W. Karmann; J. of Indust. Irradiation Tech. 1(4), 1983, 305-323).
Zur Charakterisierung des Vernetzungsgrads wurde der Gelanteil in Toluol nach der o.g. Methode bestimmt. Die Ergebnisse sind in Tabelle 7 zusammengefaßt.

**Tabelle 7**

| Gelanteil nach ES-Vernetzung | | | | |
|---|---|---|---|---|
| Zusatz | Konzentration (%) | Gelanteil (%) bei 20 kGy | Gelanteil (%) bei 50 kGy | Gelanteil (%) bei 70 kGy |
| ohne | | 17,8 | 37,5 | 39,4 |
| Weston 399 | 2 | 19,8 | 35,9 | 39,9 |
| MBI | 0,5 | 15 | 35,3 | 38,9 |

Offensichtlich führen die beiden wirksamsten Stabilisatoren im untersuchten Konzentrationsbereich, wie erwünscht, nicht zu einer wesentlichen Verringerung der Vemetzungsausbeute.

## Patentansprüche

1. Verwendung von festen, in Kautschuk löslichen oder dispergierbaren Monothiolen als Stabilisatoren in geschmolzenen Haftklebemassen auf der Basis von Naturkautschuk oder Synthesekautschuken, geeigneten Klebharzen und Promotoren zur Erhöhung der Strahlenvernetzungsausbeute.

2. Verwendung nach Anspruch 1 **dadurch gekennzeichnet, daß** das Monothiol 2-Merkapto-Benzimidazol oder ein substituiertes Derivat ist.

3. Verwendung nach Anspruch 2, **dadurch gekennzeichnet, daß** das substituierte Derivat 4-(und/oder 5)-Methyl-2-Merkapto-Benzimidazol ist.

4. Verwendung nach den Ansprüchen 1 bis 3, **dadurch gekennzeichnet, daß** als Vernetzungspromotoren mehrfunktionelle (Meth)acrylate wie Hexandiol-diacrylat (HDDA), Trimethylolpropan-triacrylat (TMPTA), Pentaerythritol-tetraacrylat (PETA) sowie deren eth- oder propoxylierte oder dimerisierte Derivate eingesetzt werden.

5. Verwendung nach den Ansprüchen 1 bis 4, **dadurch gekennzeichnet, daß** zusätzlich mindestens ein flüssiger mit dem Kautschuk verträglicher Phosphit-Ester vorhanden ist.

6. Geschmolzene Haftklebemasse auf der Basis von Naturkautschuk oder Synthesekautschuken, geeigneten Klebharzen und Promotoren zur Erhöhung der Strahlenvernetzungsausbeute, enthaltend feste, in Kautschuk lösliche oder dispergierbare Monothiole als Stabilisatoren und gegebenenfalls zumindest einen flüssigen, mit dem Kautschuk verträglichen Phosphit-Ester.

## Claims

1. Use of solid, rubber-soluble or rubber-dispersible monothiols as stabilizers in melted pressure-sensitive adhesive compositions based on natural rubber or synthetic rubbers, suitable tackifying resins and promoters for increasing the radiation crosslinking yield.

2. Use according to Claim 1, **characterized in that** the monothiol is 2-mercaptobenzimidazole or a substituted derivative.

3. Use according to Claim 2, **characterized in that** the substituted derivative is 4-(and/or 5)-methyl-2-mercaptobenzimidazole.

4. Use according to Claims 1 to 3, **characterized in that** polyfunctional (meth)acrylates such as hexanediol diacrylate (HDDA), trimethylolpropane triacrylate (TMPTA), pentaerythritol tetraacrylate (PETA) and their ethoxylated, propoxylated or trimerized derivatives are employed as crosslinking promoters.

5. Use according to Claims 1 to 4, **characterized in that** at least one liquid phosphite ester compatible with the rubber is additionally present.

6. Melted pressure-sensitive adhesive composition based on natural rubber or synthetic rubbers, suitable tackifying resins and promoters for increasing the radiation crosslinking yield, comprising solid, rubber-soluble or rubber-dispersible monothiols as stabilizers and, if desired, at least one liquid phosphite ester compatible with the rubber.

## Revendications

1. Utilisation de monothiols solides, solubles ou dispersibles dans le caoutchouc comme stabilisateurs dans des masses autoadhésives fondues à base de caoutchouc naturel ou de caoutchoucs de synthèse, de résines adhésives appropriées et de promoteurs pour améliorer le rendement de réticulation par rayons.

2. Utilisation selon la revendication 1, **caractérisée en ce que** le monothiol est le 2-mercaptobenzimidazole ou un dérivé substitué de celui-ci.

3. Utilisation selon la revendication 2, **caractérisée en ce que** le dérivé substitué est le 4-méthyl-2-mercaptobenzimidazole ou le 5-méthyl-2-mercaptobenzimidazole.

4. Utilisation selon les revendications 1 à 3, **caractérisée en ce qu'**on utilise comme promoteurs de réticulation des (méth)acrylates polyfonctionnels, tels que le diacrylate d'hexanediol (HDDA), le triacrylate de triméthylolpropane (TMPTA), le tétraacrylate de pentaérythritol (PETA) ainsi que leurs dérivés éthoxylés ou propoxylés ou leurs dérivés dimérisés.

5. Utilisation selon les revendications 1 à 4, **caractérisée en ce qu'**au moins un ester de phosphite liquide compatible avec le caoutchouc est également présent.

6. Masse autoadhésive fondue à base de caoutchouc naturel ou de caoutchoucs de synthèse, de résines adhésives appropriées et de promoteurs pour augmenter le rendement de réticulation par des rayons, contenant comme stabilisateurs des monothiols solides, solubles ou dispersibles dans le caoutchouc et, le cas échéant, au moins un ester de phosphite liquide, compatible avec le caoutchouc.
